# EUROPEAN PATENT APPLICATION

(11) **EP 3 422 321 A1**
(43) Date of publication of application: **02.01.2019**
(21) Application number: 17178895.3
(22) Date of filing: 30.06.2017
(51) Int. Cl.: G08C 21/00, G08B 25/00, G07C 5/00, B60W 40/10, B60W 40/12, B60W 50/00, G08G 1/0967

(54) **A ROAD ACCIDENT WARNING SYSTEM AND METHOD**

(71) Applicant: Advanced Digital Broadcast S.A., 1262 Eysins (CH)
(72) Inventor: Hodowany, Wiktor, 65-119 Zielona Gora (PL)
(74) Representative: Kancelaria Eupatent.pl Sp. z.o.o

(57) **Abstract**

A road accident warning method, comprising: monitoring (504) vehicle parameters; analyzing (507) the monitored vehicle parameters and based on the analysis result, determining that an accident has occurred; determining (508) geographical coordinates of a vehicle current position; preparing (510) a notification message comprising the geographical coordinates; and broadcasting (511) the notification message.

## Description

### TECHNICAL FIELD

The present invention relates to a road accident warning system and method.

### BACKGROUND

There are known various road accident warning systems that provide a car driver with information about an accident, that allows the driver to e.g. determine an alternative travel route to avoid a road section on which the accident has occurred.

A US patent US6026347 discloses a method for use in vehicles using lanes of an automated highway to avoid collisions with obstacles. A set of decision rules are embodied in a processor that are used in each vehicle to determine whether affected vehicles should change lanes or brake to minimize the expected impact with an obstacle. The presence of an obstacle in one of the lanes is detected by a lead vehicle or by sensors on the highway.

A US patent US5471214 discloses a collision avoidance and warning system for land vehicles including radar transmission and receiving apparatus for sensing the presence of objects within a spatial range relative to a vehicle, multiple target tracking apparatus receiving an output from the radar transmission and receiving apparatus for tracking a plurality of targets sensed by the radar transmission and receiving apparatus, auxiliary non-radar target sensing apparatus and alarm decision apparatus receiving an input from the multiple target tracking apparatus and from the auxiliary non-radar target sensing apparatus for indicating the alarm status of a target and providing an output indication to alarm generating apparatus.

A US patent US6085151 discloses a system wherein a relatively narrow beam of either RF or optical electromagnetic radiation is scanned over a relatively wide azimuthal range. The return signal is processed to detect the range and velocity of each point of reflection. Individual targets are identified by clustering analysis and are tracked in a Cartesian coordinate system using a Kalman filter. The threat to the vehicle for a given target is assessed from estimates of the relative distance, velocity, and size of each target, and one or more vehicular devices are controlled responsive to the assessment of threat so as to enhance the safety of the vehicle occupant.

The abovementioned systems can detect obstacles on a road and analyze whether danger of a collision occurs so they warn a single vehicle user against possible danger on a road but if an accident occurs this information will not be broadcast to the other vehicles that close to a place of the accident.

There is a need, therefore, to provide a road accident warning system that would broadcast information about a road accident automatically or being triggered manually by a driver.

### SUMMARY

The object of the invention is a road accident warning method, comprising: monitoring vehicle parameters; analyzing the monitored vehicle parameters and based on the analysis result, determining that an accident has occurred; determining geographical coordinates of a vehicle current position; preparing a notification message comprising the geographical coordinates; and broadcasting the notification message.

The monitored vehicle parameters may include vehicle speed, engine revolutions and/or airbag status.

The method may further comprise determining that an accident has occurred by comparing the monitored vehicle parameters with predetermined accident scenarios.

The method may further comprise determining an accident location address based on the determined geographical coordinates and including the address in the prepared notification message.

The method may further comprise receiving a notification message broadcast by an external source and broadcasting the received notification message.

The method may further comprise broadcasting the received notification message after checking that the current position of the vehicle is within a secure distance from the accident position indicated within the received notification message.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

There is also disclosed a road accident warning system, the system comprising an accident notification device communicatively connected with an on-board diagnostic system of a vehicle, the accident notification device comprising a controller configured to execute all steps of the method as described above.

### BRIEF DESCRIPTION OF DRAWINGS

The present invention is presented by means of example embodiment in a drawing, in which:
Fig. 1 presents an example of a scenario in which a road accident warning system is triggered;
Fig. 2A presents a first embodiment of an accident notification device;
Fig. 2B presents sensors assembly installed in the accident notification device from the first embodiment;
Fig. 2C presents a connectivity module installed in the accident notification device from the first embodiment;
Fig. 3A presents a second embodiment of an accident notification device;
Fig. 3B presents sensors assembly installed in the accident notification device from the second embodiment;
Fig. 3C presents a connectivity module installed in the accident notification device from the second embodiment;
Fig. 4 presents a memory installed in both embodiments;
Figs. 5A-5B present an operation algorithm of a mobile application implemented in the accident notification device;
Figs. 6A-6C present steps of an operation algorithm of a road accident warning system;
Figs. 7A-7B present an algorithm of a system operation in a vehicle not taking part in an accident;
Fig. 8 presents an example of appearance of an application implemented in the accident notification device from the second embodiment.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DETAILED DESCRIPTION

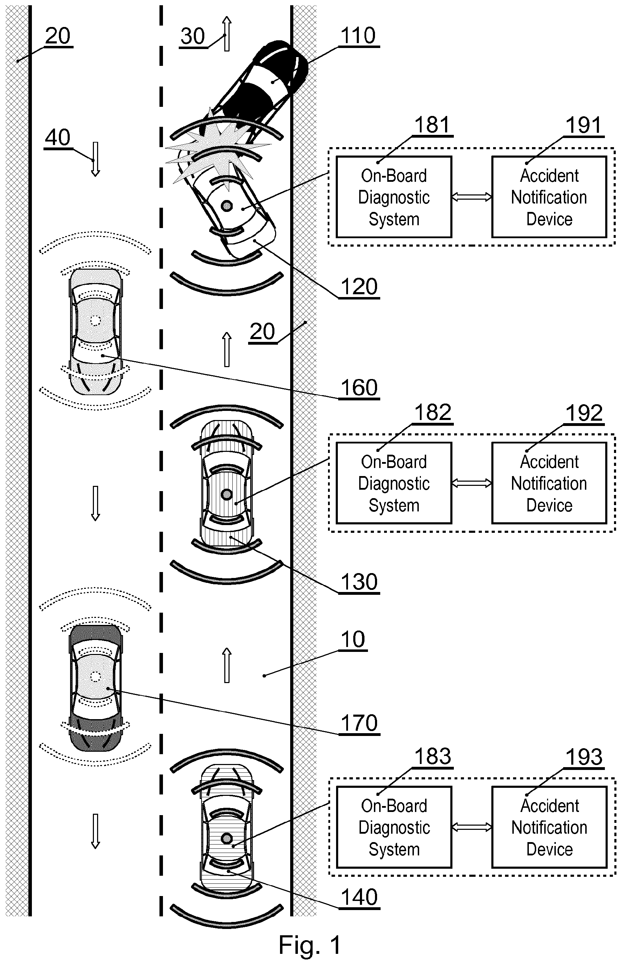

Fig. 1 shows a scenario in which vehicles 110 and 120 crash on a road 10. As a result, a road accident warning system is triggered and a notification message about an accident is broadcast to vehicles located nearby 130, 140. The broadcast information reaches vehicles moving in the opposite direction 160, 170 as well (moving away from the accident). It is assumed that the cars are equipped with an on-board diagnostic (OBD) system 181, 182, 183 and a transceiver 191, 192, 193 broadcasting a signal with the notification message about the accident as shown in Fig. 1. The signal is broadcast between the cars as long as behind one car there is another one. Optionally, a distance limit from the accident can be set, for example 5 km, beyond which the signal will no longer be transmitted. Additionally, a limit of broadcasting signals and their frequency can be set. The signal is broadcast in each direction and its coverage can be greater than the distance between cars 160 and 170 (or 130 and 140), therefore the signal can be received from a considerable distance, even if only some cars are equipped with an accident notification device 200, 300.

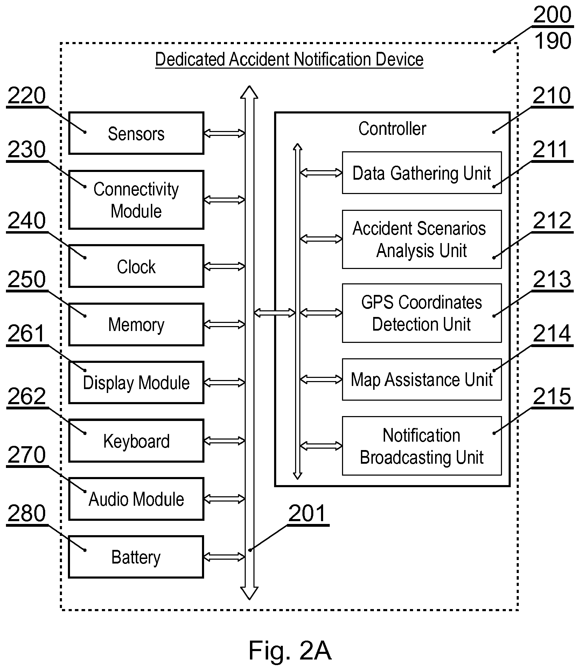

In the first embodiment presented herein, an accident notification device 200, 190 has a form of a dedicated mechanism. The structure of the accident notification device 200 is shown in details in Fig. 2A. The device 200 comprises a sensors assembly 220, a connectivity module 230, a clock 240, a memory 250, input-output devices, namely, a keyboard 262 and a display module 261, an audio module 270, a battery 280 and a controller 210. All elements are communicatively connected with a data bus 201.

The controller 210 comprises the following units configured to provide the functionality of a road accident warning system as described herein.

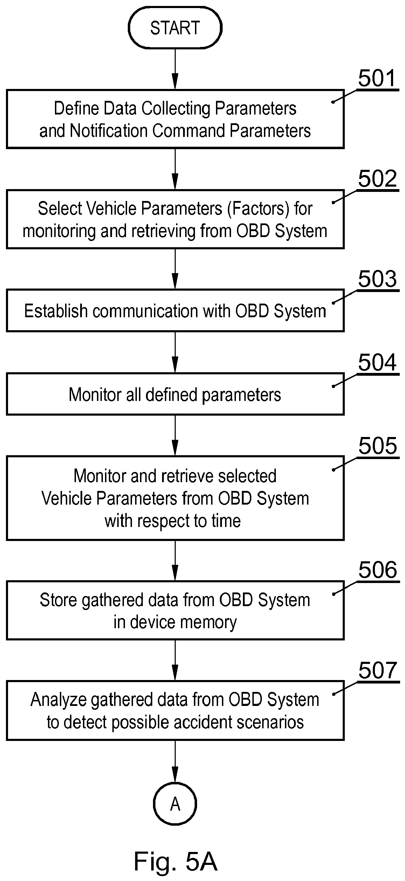

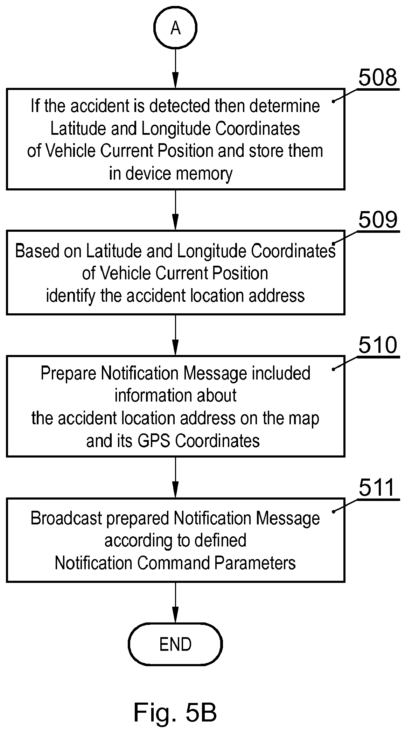

A data gathering unit 211 is configured to define data collecting parameters and notification command parameters, as well as to select vehicle parameters for monitoring and retrieving from an OBD system, according to steps 501, 502 of Figs. 5A-5B.

An accident scenarios analysis unit 212 is configured to analyze gathered data from the OBD system to detect possible accident scenarios, according to step 507 of Figs. 5A-5B.

A GPS coordinates detection unit 213 is configured to determine latitude and longitude coordinates of a vehicle current position, and preferably identify an accident location address, according to steps 508, 509 of Figs. 5A-5B.

A map assistance unit 214 is configured to prepare information about the accident location address on a map with its GPS coordinates.

A notification broadcasting unit 215 is configured to broadcast a prepared notification message according to defined notification command parameters.

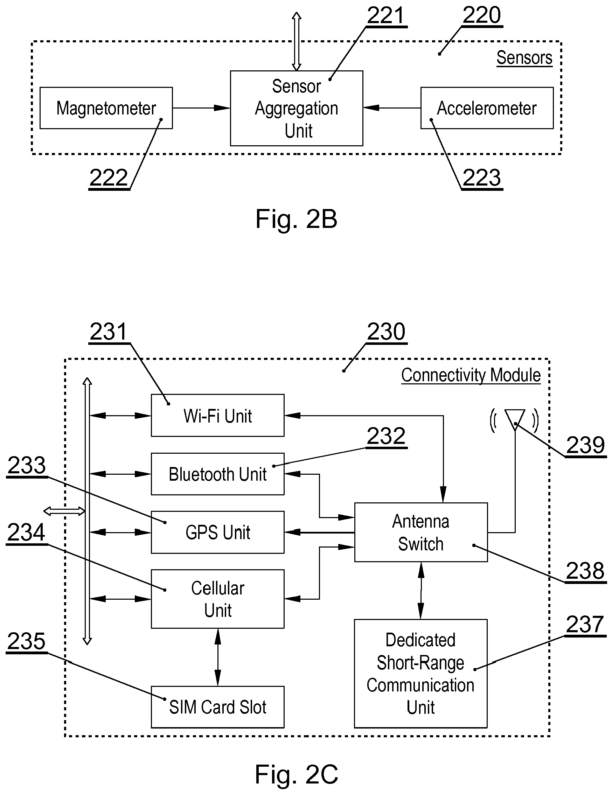

Fig. 2B shows the sensors assembly 220 comprising a sensor aggregation unit 221 which collects signals from a magnetometer 222 and an accelerometer 223. Those sensors allows to recognize and react to sudden changes of velocity and a driving direction, which can be a result of a collision or the other unexpected road event.

Further, Fig. 2C shows a connectivity module 230 which facilitates communication with the other accident notification devices or with an OBD system in the other car using a Wi-Fi unit 231, a Bluetooth unit 232 or a dedicated short-range communication unit 237. The connectivity module 230 has also a SIM card slot 235 for a SIM card facilitating communication by the GSM standard, where the SIM card slot 235 is connected to a cellular unit 234. The connectivity module 230 further comprises an antenna 239 and an antenna switch 238 which enhance received and broadcasted signal.

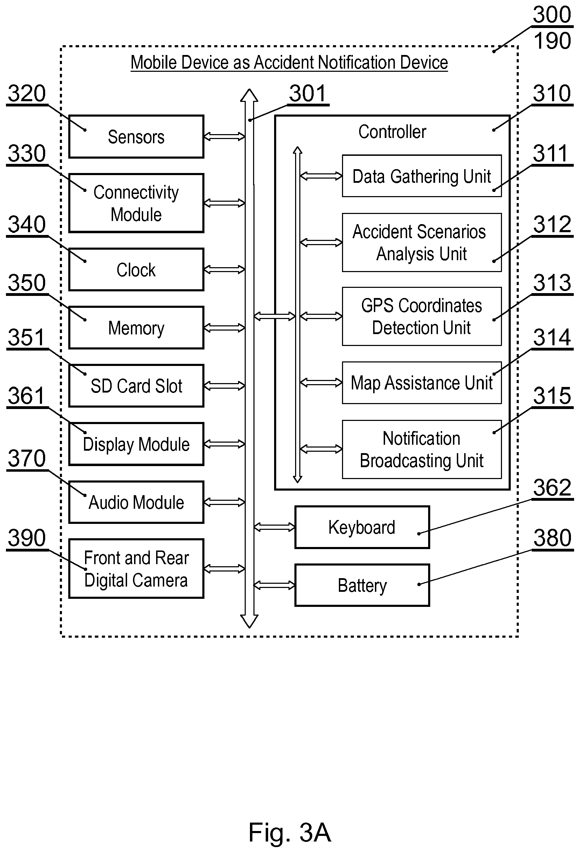

In the second embodiment presented herein, an accident notification device 300, 190 has a form of a mobile device with an implemented mobile application. The structure of the device 300 is shown in details in Fig. 3A. The device 300 comprises a sensors assembly 320, a connectivity module 330, a clock 340, a memory 350, an audio module 370, a battery 380, input-output devices, namely, a keyboard 362 and a display module 361, and a controller 310. All elements are communicatively connected with a data bus 301. The device further comprises a memory card (such as a SD card) slot 351 for communicating with an external memory. Furthermore, the device 300 is provided with a front and rear digital camera 390.

The elements 311, 312, 313, 314, 315 are equivalent to the elements 211, 212, 213, 214, 215 described with reference to the controller 210 of Fig. 2A.

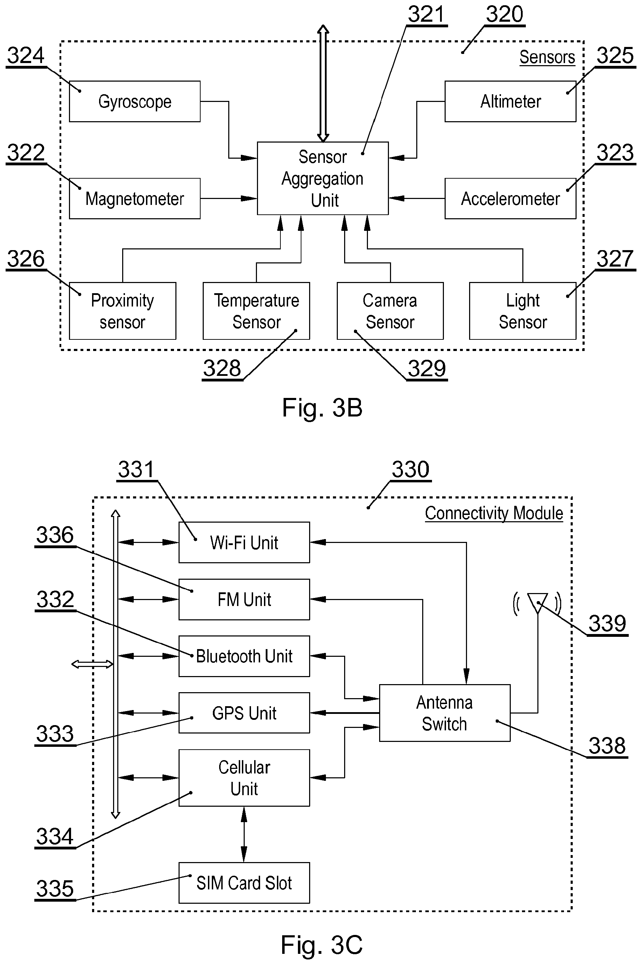

Furthermore, Fig. 3B shows a sensors assembly 320, wherein a sensor aggregation unit 321 collects signals from all sensors available in the accident notification device 300, that is: a gyroscope 324, a magnetometer 322, a proximity sensor 326, a temperature sensor 328, a camera sensor 329, a light sensor 327, an accelerometer 323 and an altimeter 325. Those sensors allow to recognize and react to sudden changes of velocity and a driving direction, which can be a result of a collision or the other unexpected road event.

Further, Fig. 3C shows a connectivity module 330 which facilitates the mobile application implemented in the device 300 using available links such a Wi-Fi unit 331, a Bluetooth unit 332 and an FM unit 336. The mobile application can also communicate using e.g. the GSM standard by a cellular network unit 334 connected to a SIM card slot 335. The connectivity module 330 further comprises an antenna 339 and an antenna switch 338 which enhance received and broadcasted signal.

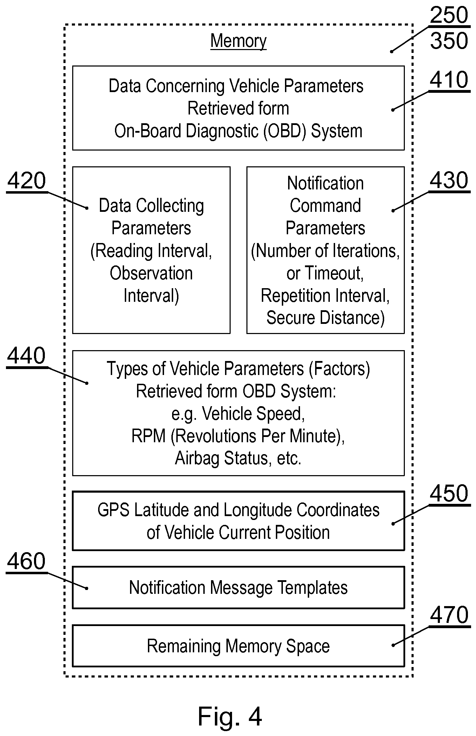

Fig. 4 shows a memory 250, 350 which is common to both embodiments. In the memory 250, 350 there are stored data with an actual vehicle location 450, data concerning vehicle parameters retrieved from an on-board diagnostic system 410, data with types of vehicle parameters retrieved from the OBD system 440, data collecting parameters 420 and notification command parameters 430 which contain information about a frequency of collecting and analyzing data from the OBD system 410. Furthermore, the memory 250, 350 comprises notification message templates used by the notification broadcasting unit 214 when preparing a notification message. The remaining memory space 470 can be used for other purposes of the system.

Data with the actual vehicle location 450 are used by the GPS coordinates detection unit 213 to determine a vehicle current position and identify an accident location address.

Based on data concerning vehicle parameters retrieved from the on-board diagnostic system 410 and data with types of vehicle parameters retrieved from the OBD system 440, it is possible to determine an actual state of particular elements of a car.

The controller 210, 310 operates according to the following steps presented in Figs. 5A-5B. In the first step 501, data collecting parameters and notification command parameters are defined, thus a frequency of reading and broadcasting of data from sensors and broadcasting parameters are fixed. Next, in step 502, vehicle parameters for monitoring and retrieving from the OBD system 410 are selected. After establishing communication 503 with the OBD system 410, the device 300 (200) starts monitoring 504 and retrieving 505 all defined parameters. All gathered data are stored 506 in the device memory 250, 350. Subsequently those data are analyzed in step 507 in order to detect a possible upcoming accident. If an accident is detected, then vehicle coordinates are stored in step 508 in the device memory. Based on stored data an accident location address is identified in step 509. Next, a notification message including information about the accident location address on the map and its GPS coordinates is prepared in step 510. The notification message prepared in such a way is broadcast according to defined notification command parameters in step 511.

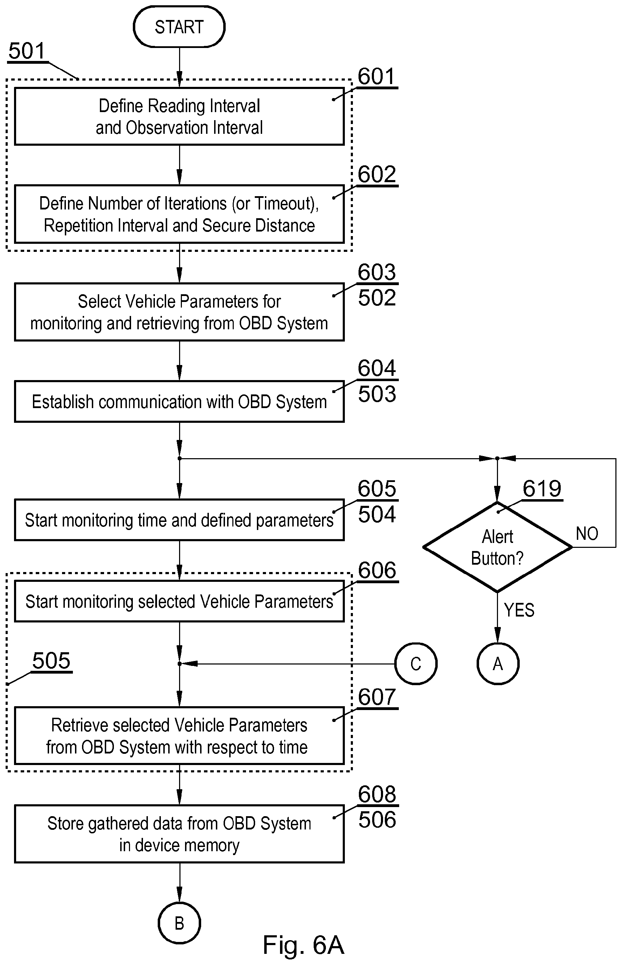

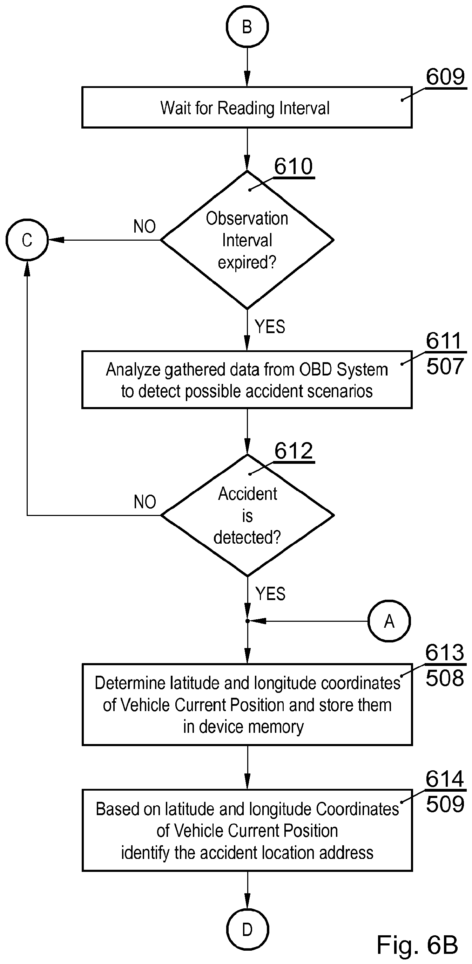

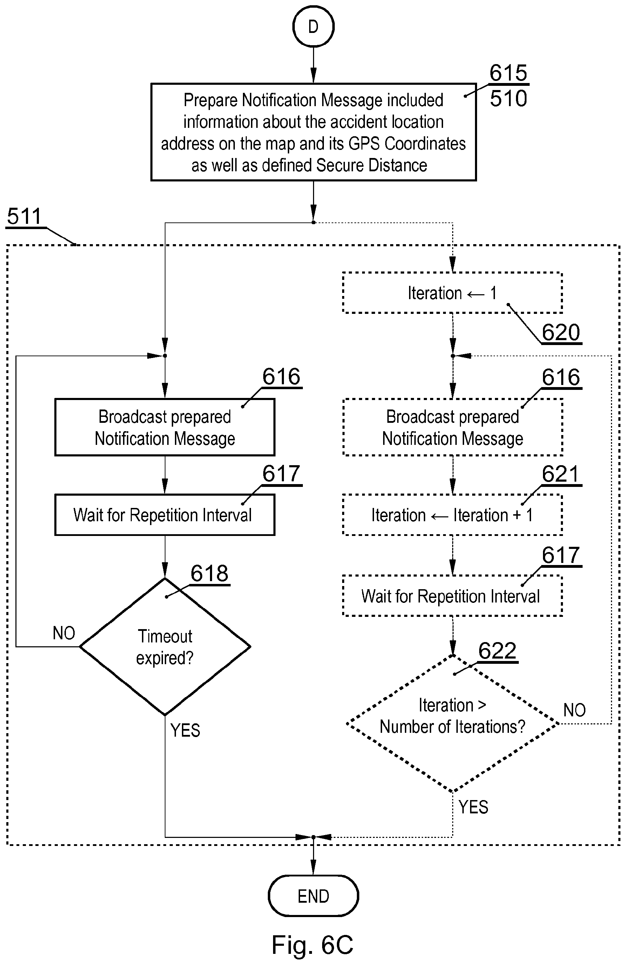

Figs. 6A-6C shows in more details the steps of the method for road accident warning shown in Figs. 5A-5B. After defining all initial parameters such as a frequency of data collecting (a reading interval and an observation interval) 601, a number of iterations of signal broadcasting or time of warning broadcasting (repetition interval) with secure distance to which the signal with a notification message about the accident is to be propagated 602, selecting vehicle parameters for monitoring and retrieving from an OBD system 603 and establishing communication with the OBD system in step 604, the system is prepared to operate. It starts monitoring time and defined parameters 605 as well as selected vehicle parameters 606. Next, selected vehicle parameters are retrieved from the OBD system with respect to time 607 and they are stored 608 in the device memory 250, 350. Subsequently, the system checks with a time limit consistent with the previously defined reading interval whether the observation interval expired 609, 610. If the observation interval did not expire the system can start retrieving selected vehicle parameters again (it goes back to the step 607). Otherwise, the system starts to analyze data gathered from the OBD system in order to detect possible accident scenarios 611. If an accident is detected 612, a current position of a car is determined and stored in the device memory 250, 350. Otherwise, the system starts retrieving previously selected parameters. Based on information about the accident, an accident location address is identified in step 614. Next, a notification message including information about the accident location address on a map and its GPS coordinates with a defined secure distance is prepared 615. The notification message is repeatedly broadcast 616, until time limit according to the repetition interval expired 617, 618.

Alternatively, the notification message may be transmitted by a predetermined number of times: after initialization of the count in step 620, the notification message is broadcast in step 616, and next the number of iterations is increased 621 and after waiting for a predetermined interval 617, if the maximum number of iterations has not been reached yet in step 622, the broadcast loop is repeated.

The algorithm shows various methods for triggering of warning broadcasting. This act can be caused by a collision, for example by triggering an airbag, or by exceeding defined limiting parameters 611, 612 and as well as by intentional triggering by a driver by pushing a button 619. If warning broadcasting is triggered by pushing the button 619, the previously described steps from 613 to 622 are performed.

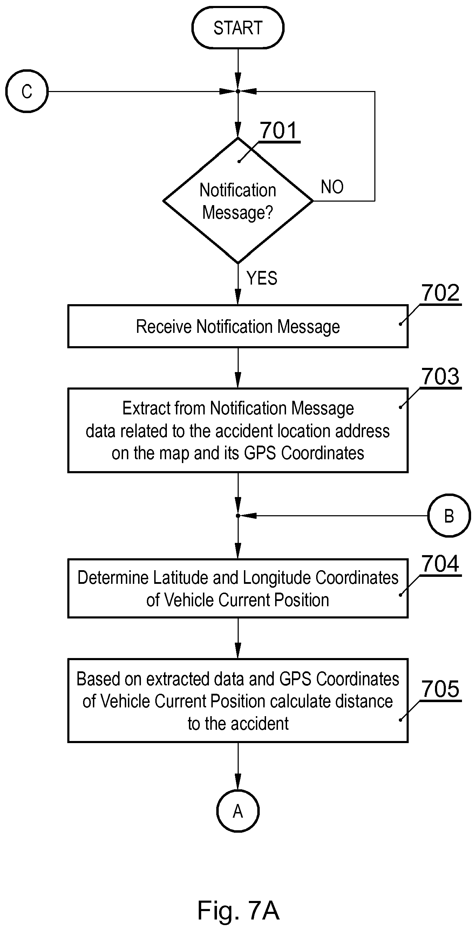

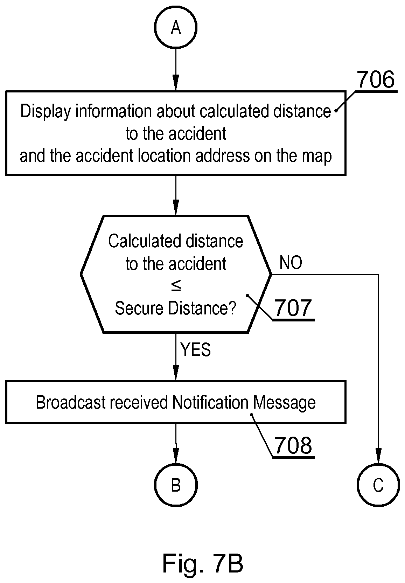

Figs. 7A-7B shows an algorithm of a system operation in a vehicle which did not take part in an accident but it received a signal with a notification message about the accident 701, 702. Based on the received notification message 703 including data related to an accident location address on a map and its GPS coordinates and determined data about a current location of the vehicle 704 the system computes a distance to the accident 705 and next information about calculated distance to the accident and the accident location address on the map are displayed (706) using the display module 261, 361. When the calculated distance to the accident is shorter or equal to a secure distance 707, the notification message is repeatedly broadcast 708 to the other vehicles (the algorithm goes back to the step 704). Only if the distance is longer than the secure distance the algorithm goes back to its beginning and the whole operation starts again.

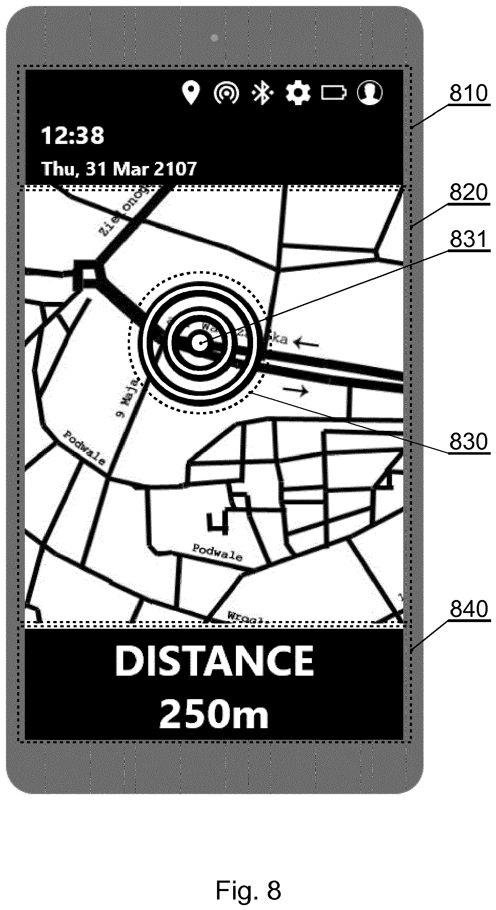

Fig. 8 presents an example of appearance of an application implemented in an accident notification device with information portion 810 where active communication elements are shown, an actual map 820 with a place of an accident 831 and communication portion 840 with an exemplary text about a distance to the accident.

The present system and method for road accident warning improve awareness of situation on a road, improves safety as well as provides for a more smooth and economic travel, by providing a broadcast information about a road accident. Further, it may not only be installed in motor vehicles but also on/in other transportation means such as bicycles, boats, yachts or similar. Therefore, the invention provides a useful, concrete and tangible result.

As per the system and data processing method described above, the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for road accident warning may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A road accident warning method, comprising:
- monitoring (504) vehicle parameters;
- analyzing (507) the monitored vehicle parameters and based on the analysis result, determining that an accident has occurred;
- determining (508) geographical coordinates of a vehicle current position;
- preparing (510) a notification message comprising the geographical coordinates; and
- broadcasting (511) the notification message.

2. The method according to claim 1, wherein the monitored (504) vehicle parameters include vehicle speed, engine revolutions and/or airbag status.

3. The method according to any of previous claims, comprising determining (507) that an accident has occurred by comparing the monitored vehicle parameters with predetermined accident scenarios.

4. The method according to any of previous claims, further comprising determining (508) an accident location address based on the determined geographical coordinates and including the address in the prepared (510) notification message.

5. The method according to any of previous claims, further comprising receiving (702) a notification message broadcast by an external source and broadcasting (708) the received notification message.

6. The method according to claim 5, comprising broadcasting (708) the received notification message after checking (707) that the current position of the vehicle is within a secure distance from the accident position indicated within the received notification message.

7. A computer program comprising program code means for performing all the steps of the computer-implemented method according to any of claims 1-6 when said program is run on a computer.

8. A computer readable medium storing computer-executable instructions performing all the steps of the computer-implemented method according to any of claims 1-6 when executed on a computer.

9. A road accident warning system, the system comprising an accident notification device (191-193) communicatively connected with an on-board diagnostic system (181-183) of a vehicle, the accident notification device (191-193) comprising a controller (210) configured to execute all steps of the method according to any of claims 1-6.
